# EUROPÄISCHE PATENTSCHRIFT

(11) **EP 3 154 274 B1**
(45) Veröffentlichungstag und Bekanntmachung des Hinweises auf die Patenterteilung: **03.10.2018**
(21) Anmeldenummer: 16189012.4
(22) Anmeldetag: 15.09.2016
(51) Int. Cl.: H04R 1/02, F16F 7/104, G11B 33/08

(54) **DÄMPFER**
DAMPER
AMORTISSEUR

(30) Priorität: 08.10.2015 CH 14612015
(43) Veröffentlichungstag der Anmeldung: 12.04.2017
(73) Patentinhaber: Rohrer, Christian, 3086 Zimmerwald (CH)
(72) Erfinder: Rohrer, Christian, 3086 Zimmerwald (CH)
(74) Vertreter: Keller & Partner Patentanwälte AG

(56) Entgegenhaltungen:
- CH-A2- 699 714
- DE-U1-202013 006 897
- GB-A- 452 858
- US-A- 5 330 165

## Beschreibung

### Technisches Gebiet

Die Erfindung betrifft einen Dämpfer zum Anbringen zwischen einem Gerät der Beschallungstechnik oder Unterhaltungselektronik, insbesondere einem Audio-Wiedergabegerät, oder einem Musikinstrument und einer Stellfläche, umfassend ein Gehäuse zur Anbringung am Gerät oder am Musikinstrument und einen Dämpfereinsatz aus einem elastischen Material. Der Dämpfereinsatz ist derart mantelseitig passend in das Gehäuse einsetzbar, dass ein vorderer Bereich des Dämpfereinsatzes bei angebrachtem Gehäuse in eine Richtung, die dem Gerät oder Musikinstrument abgewandt ist, teilweise aus dem Gehäuse hervor ragt.

### Stand der Technik

Bei Lautsprecherboxen besteht das Problem, dass Schwingungen der Membran auf das Gehäuse der Lautsprecherbox und von dieser auf die Stellfläche übertragen werden, auf der die Lautsprecherbox steht. Dies kann zu Klangverzerrungen führen. Es ist bekannt, die am Lautsprecherboxengehäuse auftretenden Schwingungen mittels sogenannter Spikes in den Boden abzuleiten. Hierbei besteht allerdings bei schwingenden Untergründen, wie z. B. einem Parkettboden oder Regalbrettern, das Problem, dass die auftretenden Kräfte in die Stellfläche übertragen werden und es dann zu unkontrollierten und unerwünschten Schwingungsemissionen kommt, die zu Verzerrungen im Klangbild führen. Es sind auch Rückübertragungen der Resonanzschwingungen auf das Lautsprechergehäuse möglich, die zu weiteren Beeinträchtigungen des Klangbilds führen.

Um diese Probleme zu vermeiden, ist es bekannt, bei Lautsprecherboxen Massnahmen zur Schwingungsdämpfung vorzusehen. Dazu eingesetzte Dämpfer dienen somit primär zum Entkoppeln des Geräts, d. h. sie verhindern, dass die Stellfläche mitschwingt. Ausserdem sind sie geeignet, schmalbandige Resonanzen des Gehäuses zu eliminieren. Aufgrund des vorher Gesagten ist der Einsatz von Dämpfern besonders dann angezeigt, wenn schwingende Untergründe vorhanden sind, wie z. B. ein Parkettboden oder ein Regalbrett. Eine an das Gerät, die Stellfläche und die Raumakustik angepasste Bedämpfung führt insbesondere zu einem präziseren Bass, klareren Mitten und einer verbesserten Räumlichkeit des reproduzierten Klangs.

Um ihre Funktion erfüllen zu können, sind Dämpfer in der Regel aus einem elastischen Material ausgebildet bzw. umfassen elastische Elemente wie z. B. Federn. Dämpfer können in einen fest mit dem Gehäuse verbundenen Fuss integriert sein, sie können an einem Gehäuse anschraubbar ausgebildet sein oder dem zu bedämpfenden Gehäuse einfach unterschoben werden. Sie können kleinflächig ausgebildet sein oder grossflächig, z. B. als Untersetzplatten, deren Grundfläche derjenigen des Geräts entspricht bzw. diese übertrifft.

Es hat sich gezeigt, dass die passende Bedämpfung nicht nur bei Lautsprecherboxen entscheidende Klangverbesserungen bringt, sondern auch bei anderen Geräten der Beschallungstechnik oder Unterhaltungselektronik, z. B. bei CD- oder Plattenspielern oder Verstärkern sowie bei akustischen und elektronischen Musikinstrumenten, die auf den Boden gestellt werden, insbesondere bei Klavieren und Flügeln.

Bei einer Reihe von bekannten Dämpfern besteht das Dämpferelement, d. h. derjenige Teil des Dämpfers, welcher für die Dämpfung primär verantwortlich ist, aus einem Material mit einer der zu erreichenden Dämpfung angepassten Elastizität. So beschreibt z. B. die DE-OS 43 40 493 A1 (Joachim Lars Berndt) einen vibrationsabsorbierenden Fuss für Lautsprecherboxen, der aus Zellkautschuk oder einem ähnlichen elastomeren Material besteht, dessen Struktur aus wenigstens zwei übereinanderliegenden, mit einem gasförmigen Element gefüllten Zwischenschichten aufgebaut ist.

Die DE 20 2013 006 897 U1 (K. P. Grasse) beschreibt einen Schwingungsabsorber zur akustischen Entkopplung eines Phonogeräts von seiner Umgebung. Der Schwingungsabsorber umfasst zwei Absorberelemente, die ein thermoplastisches Elastomer enthalten und eine Shore-A-Härte von 30-60 aufweisen. Die Absorberelemente können jedoch auch unterschiedliche Werkstoffe oder unterschiedliche Eigenschaften, wie beispielsweise unterschiedliche Shore-A-Härten, aufweisen, damit Schwingungen unterschiedlicher Frequenzbereiche absorbiert werden können. Das Element aus dem härtesten Material kann unten angeordnet werden und das am wenigsten steife oben. In einer Ausführung sind die Absorberelemente aufeinander gestapelt. Ein Haltering umreift die Absorberelemente aussen, konzentrisch um eine Hauptachse. Sind die Absorberelemente aufeinander gestapelt, greifen Fortsätze von Koppel- und Kontaktbereichen der beiden Absorberelemente formschlüssig ineinander. Somit ist an den Kontaktflächen Flächenreibung möglich, mittels welcher Schwingungen zusätzlich zur inneren Reibung im Material absorbiert werden können. In einer weiteren Ausführung umfasst ein Standfuss einen Schwingungsabsorber und einen Höhenverstellmechanismus, welcher eine runde Drehscheibe, eine Auflagescheibe und ein Lager umfasst. Die Drehscheibe weist in ihrem Zentrum ein Durchgangsloch mit einem Innengewinde auf. Die Auflagescheibe weist eine Auflagefläche auf, welche zur Auflage des zu dämpfenden Phonogeräts vorgesehen und ausgebildet ist.

Es hat sich jedoch gezeigt, dass bei diesen bekannten Elementen zum einen die Dämpfung verschiedenartiger Schwingungen des Gehäuses bzw. vertikaler und horizontaler Schwingungskomponenten nicht in gleichem Masse erfolgen kann und das zum anderen - insbesondere beim Bedämpfen von schweren Geräten wie leistungsfähigen Verstärkern oder schweren Lautsprecherboxen - die Dämpferelemente eine beschränkte Lebensdauer besitzen, weil sie aufgrund des Gerätegewichts in vertikaler Richtung derart komprimiert werden, dass sich das Material setzt. Dies führt dazu, dass das Dämpferelement seine Aufgabe nicht mehr in optimaler Weise ausführen kann oder sogar dazu, dass das Gerät direkt auf dem Boden aufliegt, z. B. über ein Gehäuse des Dämpfers.

Es sind aus dem Stand der Technik andersartige Dämpferkonzepte bekannt, die die genannten Probleme zum Teil ansprechen und lösen. So zeigt die DE G 92 06 488 (Dieter Pladwig) beispielsweise einen Dämpfer mit einem einseitig offenen schalenförmigen Gehäuse, das mit schwingungsdämpfendem Material, z. B. einem zweischichtigen Material aus Gummi und einer Schaumschicht oder einer Flüssigkeit, gefüllt ist. An der Oberfläche des schwingungsdämpfenden Materials ist ein Tragkörper angeordnet, auf dem die Bodenplatte des zu bedämpfenden Geräts reibungsarm gelagert ist. Dadurch wird erreicht, dass durch Schwingungen der Lautsprechermembran bewirkte waagerecht wirkende Schwingungen des Gehäuses nicht aufgrund von Haftreibung zwischen dem Gehäuse und der Stellfläche in den Boden übertragen werden.

Diese Konstruktion ist allerdings aufwendig. Für die Dämpfung horizontaler und vertikaler Schwingungskomponenten des Geräts werden hier gänzlich verschiedene Mittel vorgeschlagen.

Die WO 2010/043059 A1 des Anmelders der vorliegenden Patentanmeldung beschreibt einen Dämpfer, dessen Dämpferelement einstückig aus einem Kunststoffmaterial ausgebildet ist und eine Struktur mit mehreren beabstandeten Bereich verringerten Querschnitts aufweist. Durch die Wahl einer geeigneten Geometrie und die Auswahl einer dem zu bedämpfenden Gerät angepassten Härte lässt sich erreichen, dass bei belastetem Dämpferelement eine erste Federkonstante in axialer Richtung und eine zweite Federkonstante in einer zur axialen Richtung senkrechten radialen Richtung ungefähr gleich gross sind. Dadurch werden eine gleichmässige Bedämpfung der Schwingungen unabhängig von deren Hauptschwingungsrichtung und damit ein verbesserter Klang erreicht.

Die Auswahl desjenigen Dämpferelements mit der richtigen Härte bedeutet einen erheblichen Aufwand. Für die Anpassung, die mit Vorteil durch einen Fachmann vorgenommen wird, müssen für jeden Dämpfer Dämpferelemente der richtigen Härte in ausreichender Zahl vorrätig sein. Der Austausch einer Reihe von Dämpferelementen nimmt stets eine gewisse Zeit in Anspruch. Falls die Dämpfer, z. B. nach Ersatz eines Geräts, für ein anderes Gerät genutzt werden sollen, müssen die Dämpferelemente in der Regel durch solche unterschiedlicher Härte ausgetauscht werden.

### Darstellung der Erfindung

Aufgabe der Erfindung ist es, einen dem eingangs genannten technischen Gebiet zugehörenden Dämpfer zum Anbringen zwischen einem Gerät der Beschallungstechnik oder Unterhaltungselektronik oder einem Musikinstrument und einer Stellfläche zu schaffen, welcher eine klanglich vorteilhafte Bedämpfung unterschiedlicher Geräte bzw. Musikinstrumente ermöglicht.

Die Lösung der Aufgabe ist durch die Merkmale des Anspruchs 1 definiert. Gemäss der Erfindung ist eine erste Elastizität des vorderen Bereichs des Dämpfereinsatzes geringer als eine zweite Elastizität eines hinteren Bereichs des Dämpfereinsatzes, welcher mantelseitig das Gehäuse kontaktiert.

Die Elastizität ist dabei insbesondere durch den Elastizitätsmodul des für den jeweiligen Bereich des Dämpfereinsatzes verwendeten Materials charakterisiert.

Im Folgenden bezieht sich die Angabe "axial" auf eine Richtung, die im Einsatz des Dämpfers senkrecht steht zur Stellfläche, im Allgemeinen also vertikal ausgerichtet ist. "Radial" bezieht sich hingegen auf Richtungen, die senkrecht zur dieser axialen Richtung stehen (d. h. parallel zur Ebene, die durch die Stellfläche definiert wird).

Der Dämpfereinsatz weist also einen hinteren Teil auf, der mantelseitig passend in das Gehäuse einsetzbar ist. Dies bedeutet, dass das Gehäuse als eine Aufnahme für den Dämpfereinsatz ausgebildet ist, welche die Mantelfläche des hinteren Teils des Dämpfereinsatzes passend umschliesst. Dies bedeutet nicht zwingend, dass die Mantelfläche über die gesamte axiale Ausdehnung des hinteren Teils oder stets entlang des gesamten Umfangs in Kontakt mit der Aufnahme sein muss, sondern es können axiale (oder auch radiale) Abschnitte vorhanden sein, die radial nach innen zurückversetzt sind. Die Geometrie ist aber so gewählt, dass radiale Kräfte zwischen Dämpfereinsatz und Gehäuse möglichst gleichmässig übertragen werden. In einer bevorzugten Ausführungsform ist der Querschnitt der Aufnahme für das Dämpferelement kreisrund, und der Dämpfereinsatz weist in seinem hinteren Teil, welcher mit der Aufnahme zusammenwirkt, einen ebenfalls im Wesentlichen kreisrunden Aussenmantel mit entsprechendem Durchmesser auf. Der Aussenmantel kann durchgängig ausgebildet sein, also einen Zylinder bilden, oder es können gewisse, durch Ausnehmungen gebildete, Strukturen vorhanden sein, die aber derart sind, dass auch in diesem Fall der Dämpfereinsatz und die Aufnahme rotationssymmetrisch zusammenwirken.

Das Gehäuse kann auf unterschiedliche Art am Gerät bzw. Musikinstrument angebracht werden. Die Anbringung hängt zum einen davon ab, wie der Dämpfer ausgebildet ist, also ob es sich z. B. um einen Gehäusefuss, eine Untersetzplatte oder einen an einem Gehäusefuss anbringbaren Dämpfer handelt. Im einfachsten Fall wird das Gerät bzw.

Musikinstrument einfach auf einen oder mehrere Dämpfer gestellt, eine mechanische Verbindung ist nicht zwingend.

Erfindungsgemäss ist der Bereich höherer Elastizität vollständig vom Gehäuse umschlossen. In axialer Richtung, d. h. in Bezug auf vertikale Schwingungen, kann er seine Dämpfungsaufgaben ungehindert wahrnehmen, während seine Bedämpfung in radialer Richtung, d. h. in Bezug auf horizontale Schwingungen, aufgrund des Gehäuses beschränkt ist. Aus dem Gehäuse heraus ragt dann lediglich ein Bereich mit geringerer Elastizität, der letztlich den Kontakt mit der Stellfläche schafft. Dies stellt sicher, dass in vertikaler Richtung eine ausreichende Bedämpfung stattfinden kann, welche insbesondere eine unerwünschte Anregung der Stellfläche (also z. B. des Bodens, eines Regalbodens o. ä.) verhindert. In horizontaler Richtung ist jedoch aufgrund der reduzierten Elastizität des vorderen Bereichs und des Gehäuses im hinteren Bereich trotzdem eine stabile Ankopplung an die Stellfläche gegeben. Es hat sich gezeigt, dass dadurch die Klangeigenschaften des Geräts, insbesondere diejenigen von Lautsprechern, bestmöglich bewahrt werden.

Zudem erhöht die umschliessende Aufnahme eines wesentlichen Teils des Dämpfereinsatzes sowohl die axiale als auch die radiale mechanische Stabilität des Dämpfereinsatzes sowie dessen Lebensdauer, da sie verhindert, dass der Dämpfereinsatz aufgrund der Gewichtsbelastung nach aussen "wegfliessen" kann.

In einer bevorzugten Ausführungsform umfasst der Dämpfereinsatz zwei Dämpferelemente, wobei ein erstes der Dämpferelemente die erste Elastizität aufweist und ein zweites der Dämpferelemente die zweite Elastizität aufweist. Die Dämpferelemente sind insbesondere in axialer Richtung gestapelt, füllten somit jeweils im Wesentlichen den gesamten radialen Querschnitt aus. Es können auch mehr als zwei Dämpferelemente vorhanden sein. Die Dämpferelemente können direkt aneinander befestigt, z. B. miteinander verklebt sein, oder sie sind nicht direkt miteinander verbunden und werden durch das Gehäuse relativ zueinander positioniert.

Mit Vorteil sind die zwei Dämpferelemente je einstückig aus einem elastischen Kunststoffmaterial ausgebildet. Dies ermöglicht eine einfache und kostengünstige Herstellung, beispielsweise mittels eines Spritzgussverfahrens.

Alternativ ist ein Dämpfereinsatz vorhanden, der mehrere Bereiche mit unterschiedlichen elastischen Eigenschaften aufweist.

Es hat sich herausgestellt, dass sich thermoplastische Elastomere (TPE), insbesondere thermoplastische Elastomere auf Olefinbasis (TPE-O), besonders gut als Material für das erfindungsgemässe Dämpferelement eignen.

In Blindtests hat sich erwiesen, dass sie gegenüber anderen Materialien klangliche Vorteile bieten; zudem ermöglichen sie eine lange Lebensdauer, da das Material seine anfängliche Elastizität während einer sehr langen Zeit beibehält. Weiter sind derartige Materialien mit der für die Dämpfung optimalen Härte kommerziell verfügbar und lassen sich wirtschaftlich verarbeiten, z. B. durch Spritzgussverfahren. Schliesslich sind diese Kunststoffe in fettfreier Form verfügbar, so dass Beschädigungen der Stellfläche an den Kontaktstellen vermieden werden.

Anstelle von TPE sind grundsätzlich auch andere elastische Kunststoffmaterialien einsetzbar, so z. B. reines EPDM, Butadien-Kautschuk (BR), Polyurethane oder Polyamide.

Mit Vorteil wird der vordere Bereich durch ein Material mit einer ersten Härte im Bereich 35 - 55 Shore A gebildet, und der hintere Bereich wird durch ein Material mit einer zweiten Härte im Bereich 15 - 40 Shore A gebildet, wobei eine Differenz der Härten mindestens 8 Shore A beträgt (jeweils gemessen nach DIN 53505, 7868; Haltezeit 15 s, bei 23 °C).

Bei Elastomeren besteht ein enger Bezug zwischen der Shore-Härte und dem Elastizitätsmodul (vgl. J. Kunz, M. Studer: "Druck-Elastizitätsmodul über Shore-A-Härte ermitteln", Kunststoffe 6/2006, S. 92-94). Das härtere Material weist demnach eine geringere Elastizität auf. Die genannten Shore-Werte entsprechen gemäss dem genannten Artikel ungefähr folgenden Elastizitätsmodulen:

| Shore A | Elastizitätsmodul [MPa] |
|---|---|
| 15 | 1.7 |
| 35 | 3.5 |
| 40 | 4.1 |
| 55 | 5.9 |

Durch eine Anpassung der geometrischen Struktur und/oder der Dimensionen des Dämpferelements lassen sich im Rahmen der Erfindung grundsätzlich auch Materialien geringerer oder grösserer Härte einsetzen.

Bevorzugt wird der Dämpfereinsatz aus einem aufgeschäumten Kunststoffmaterial, insbesondere einem aufgeschäumten TPE, gefertigt. Wiederum hat es sich im Rahmen der erwähnten Blindtests gezeigt, dass aufgeschäumte Materialien hinsichtlich der erreichbaren Klangverbesserungen vorteilhaft sind. Durch das Aufschäumen lassen sich die Dämpfeigenschaften gezielt optimieren. Gute Langzeiteigenschaften sind auch den aufgeschäumten Materialien eigen.

Das Aufschäumen erfolgt bevorzugt durch den an sich bekannten Einsatz von Treibmitteln und Gasen im Rahmen eines Spritzgussverfahrens. Ein geeignetes Verfahren offenbart beispielsweise die DE 42 13 263 A1 (Astro-Valcour).

Mit Vorteil erstreckt sich der vordere Bereich bei eingesetztem Dämpfereinsatz axial mindestens bis zu einer Tiefe d in das Gehäuse, wobei die Tiefe d mindestens 1 %, insbesondere mindestens 2 %, einer maximalen radialen Ausdehnung des Dämpfereinsatzes beträgt. Dadurch wird sichergestellt, dass eine radiale Kraftübertragung zwischen dem Gehäuse und dem (weniger elastischen) vorderen Bereich stattfindet und damit eine zuverlässige Ankopplung des Geräts an die Stellfläche in horizontaler Richtung.

Bei einer bevorzugten Ausführungsform weist der Dämpfereinsatz eine Struktur mit mehreren beabstandeten Bereichen verringerten Querschnitts auf. Bei den Bereichen verringerten Querschnitts kann es sich um sacklochartige Ausnehmungen, um durchgehende Öffnungen oder um innenliegende Aussparungen handeln. Mit Hilfe der Struktur mit mehreren beabstandeten Bereichen verringerten Querschnitts ist es trotz des einstückigen Aufbaus möglich, die mechanischen Eigenschaften des Dämpferelements und damit dessen Dämpfungseigenschaften gezielt im Hinblick auf einen optimalen Klang zu optimieren. Insbesondere ist es mit Hilfe der Struktur möglich, die Dämpfungseigenschaften des Dämpferelements in vertikaler Richtung einerseits und in horizontaler Richtung andererseits auf verschiedene Weise zu beeinflussen. Dies ist insofern bedeutsam, als das Gerätegewicht das Dämpferelement in vertikaler Richtung belastet und somit zu einer erheblichen Vorspannung führt, welche in der Regel deutlich höher ist als eine Vorspannung in horizontaler Richtung.

Mit Vorteil weist das Dämpferelement eine durchgehende erste Hauptfläche auf, während eine zweite Hauptfläche, welche der ersten Hauptfläche gegenüberliegt, mit mehreren beabstandeten sacklochartigen Ausnehmungen versehen ist. Die durchgehende Hauptfläche kann insbesondere die Kontaktfläche mit der Stellfläche bilden. Es hat sich gezeigt, dass eine solche Struktur die gewünschten Dämpfungseigenschaften ermöglicht, während aufgrund der durchgehenden Hauptfläche ein Eindringen von Schmutz in das Dämpferelement verhindert werden kann und die mechanische Stabilität des Elements verbessert wird.

Das Element kann auch anders ausgebildet sein, insbesondere dann, wenn es in einer gekapselten Form verwendet wird, wo das Eindringen von Schmutz durch die Kapselung ohnehin verhindert wird und ein gesondertes Element für die Kontaktierung der Stellfläche zur Verfügung steht.

In einer bevorzugten Ausführungsform besitzt das Dämpferelement derartige Ausnehmungen, dass mehrere umlaufende Stege ausgebildet sind, welche durch mehrere im Wesentlichen radiale Stege miteinander verbunden sind. Die umlaufenden Stege gewährleisten eine gleichmässige Abstützung der axial auf das Dämpferelement einwirkenden Kräfte, während die radialen Stege die umlaufenden Stege mechanisch stützen und gleichzeitig die Elastizität in radialer Richtung sicherstellen. Durch diese bevorzugte Geometrie wird bei belastetem Dämpferelement eine ähnliche Elastizität (Federkonstante) in axialer Richtung einerseits und in radialer Richtung andererseits ermöglicht.

Die erwähnte Strukturierung ist insbesondere bei Dämpferelementen von Vorteil, welche eine kreiszylindrische Form aufweisen. Dabei weist die durch die umlaufenden sowie radialen Stege gebildete Struktur mit Vorteil eine Drehsymmetrie auf, wobei die Drehsymmetrie bevorzugt mindestens sechsteilig, besonders bevorzugt mindestens achtteilig, ist. Eine derartige Drehsymmetrie gewährleistet eine gleichmässige Elastizität über die gesamte Fläche des Dämpferelements, unabhängig von dessen Drehlage. Die Anzahl der radialen Stege und/oder der Abstand der umlaufenden Stege können in Abhängigkeit der Entfernung von der Symmetrieachse unterschiedlich sein, ohne dass die Drehsymmetrie aufgegeben werden muss.

Andere Geometrien der Strukturierung sind möglich, z. B. eine zellenartige Struktur mit einer isotropen Zellverteilung.

Die durchgeführten Versuche haben ergeben, dass es von Vorteil ist, wenn die Ausnehmungen derart ausgebildet sind, dass eine Gesamtfläche der Ausnehmungen 15 - 50 %, bevorzugt 25 - 40 %, einer Gesamtfläche der zweiten Hauptfläche ausmacht. Diese Werte ermöglichen eine ausreichende und gleichmässige Abstützung des zu tragenden Gewichts bei gleichzeitig ausreichender radialer Elastizität.

Je nach verwendetem Material können auch andere Anteile vorgesehen werden.

Mit Vorteil liegt ein Verhältnis einer maximalen Ausdehnung des Dämpfereinsatzes zu einer Höhe des Dämpfereinsatzes im Bereich von 2.25 - 5.5, bevorzugt im Bereich von 2.75 - 4.0. Der Dämpfereinsatz hat bevorzugt eine im Wesentlichen kreiszylindrische Form, wobei in diesem Fall die maximale Ausdehnung mit dem Durchmesser des Elements zusammenfällt. Die angegebenen Werte für das Verhältnis zwischen maximaler Ausdehnung (also z. B. Durchmesser) und Höhe ermöglichen die Herstellung von Dämpferelementen, die ohne aufwendige Zusatzmassnahmen eine mechanisch stabile Lagerung des Geräts ermöglichen, gleichzeitig aber auch in der Lage sind, sowohl in vertikaler als auch in horizontaler Richtung Schwingungen optimal zu bedämpfen.

Durch Einsatz einer geeigneten Lagerung für das Dämpferelement kann dieses auch ein Verhältnis von weniger als 2.25 aufweisen. Bei grossflächigen Dämpferelementen, wie sie z. B. für Untersetzplatten eingesetzt werden können, kann das Verhältnis auch grösser sein als 5.5.

Mit Vorteil umfasst das Gehäuse eine Gewindeöffnung zur Aufnahme einer Befestigungsschraube oder eines Befestigungsadapters. Dies ermöglicht eine einfache und sichere Befestigung des Dämpfers am zu bedämpfenden Gerät. Befestigungsadapter ermöglichen die Anpassung des Dämpfers an unterschiedliche Schraubenmasse. Dies ist insofern von Vorteil als die bei im Handel erhältlichen Geräten vorhandenen Schrauben kein genormtes Mass aufweisen.

Besonders bevorzugt ist diese Gewindeöffnung mit einem Gewinde versehen, welches sich nicht über eine gesamte Länge der Gewindeöffnung erstreckt. Entspricht der Innenquerschnitt des nicht mit dem Gewinde versehenen Abschnitts dem Innenquerschnitt des Gewindes (Kerndurchmesser), wird ein Festschrauben einer Schraube bzw. eines Gewindebolzens oder einer Gewindestange ermöglicht, so dass sich eine Abstützung auf der Aussenseite der Aufnahme oder an einem Gegenstück erübrigt.

Alternativ ist im nicht mit dem Gewinde versehenen Abschnitt der Gewindeöffnung eine Aufnahme für ein Gegenstück, insbesondere für eine Mutter, ausgebildet.

Mit beiden Varianten kann einerseits eine einfache Befestigung am Gerät ermöglicht werden, unabhängig davon, ob dieses z. B. einen Gewindebolzen oder eine Gewindebohrung aufweist, andererseits wird verhindert, dass die Befestigungsschraube des Geräts in direkten Kontakt mit dem Dämpferelement kommt. Vielmehr wird gewährleistet, dass alle abzuleitenden Vibrationen gleichmässig von der Aufnahme auf das Dämpferelement übertragen werden. Gleichzeitig ermöglichen diese Lösungen eine äusserst platzsparende Bauweise und damit eine vorteilhafte Optik des Dämpfers.

Bei einer Ausführungsform des erfindungsgemässen Dämpferelements ist auf der durchgehenden ersten Hauptfläche eine Gleitfläche ausgebildet. Wird das Dämpferelement derart am zu bedämpfenden Gehäuse angebracht, dass es die Kontaktfläche mit der Stellfläche bildet, wenn das Dämpferelement z. B. den untersten Teil eines Gehäusefusses bildet, ermöglicht dies ein einfaches Verschieben des Geräts, insbesondere auf glatten Böden wie Parkett- oder Steinböden.

Bei einem Dämpferelement, das durch ein Spritzgussverfahren hergestellt ist, wird die Gleitfläche bevorzugt auf der ersten Hauptfläche des Dämpferelements angeformt, d. h. ein Stück eines Materials mit Gleiteigenschaften wird während des Spritzgiessens mit dem Dämpfermaterial verbunden. Als geeignetes Material hat sich insbesondere Polyamid erwiesen, es sind aber auch andere Materialien möglich, z. B. Kunststoffe mit einem gewissen Anteil PTFE.

Bei anderen Ausführungsformen fehlt die Gleitfläche.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: einen Querschnitt in einer axialen Ebene durch eine erste Ausführungsform eines erfindungsgemässen Dämpfers;
- Fig. 2: einen Querschnitt durch den Dämpfer in der radialen Ebene A-A der Figur 1;
- Fig. 3: einen axialen Querschnitt durch eine zweite Ausführungsform eines erfindungsgemässen Dämpfers; und
- Fig. 4: einen axialen Querschnitt durch eine dritte Ausführungsform eines erfindungsgemässen Dämpfers.

Grundsätzlich sind in den Figuren gleiche Teile mit gleichen Bezugszeichen versehen.

### Wege zur Ausführung der Erfindung

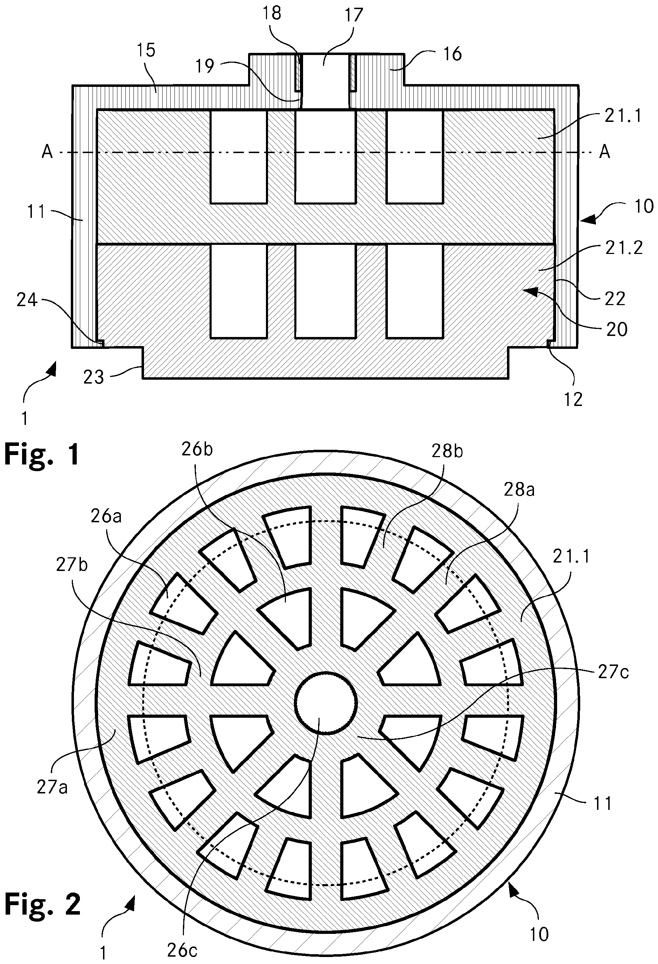

Die Figur 1 zeigt einen Querschnitt in einer axialen Ebene durch eine erste Ausführungsform eines erfindungsgemässen Dämpfers, die Figur 2 zeigt einen Querschnitt durch den Dämpfer in der radialen Ebene A-A der Figur 1.

Der Dämpfer 1 umfasst ein Gehäuse 10 sowie einen darin aufgenommenen Dämpfereinsatz 20. Das Gehäuse 10 ist kreissymmetrisch und umfasst einen hohlzylindrischen Abschnitt 11, der einseitig durch eine Deckelfläche 15 abgeschlossen ist. Im Bereich der durch den hohlzylindrischen Abschnitt 11 gebildeten Krone, an der Umrandung der Öffnung des Gehäuses 10 ist eine umlaufende Nase 12 ausgebildet, welche sich senkrecht zur Symmetrieachse des Gehäuses 10 radial nach innen erstreckt.

Das Gehäuse 10 ist aus eloxiertem Aluminium gefertigt. In der Deckelfläche 15 des Gehäuses 10 ist mittig ein zylindrischer Aufnahmeteil 16 ausgebildet, der sich nach aussen erstreckt und eine durchgehende Öffnung 17 mit einem Innengewinde 18 aufweist. Das Innengewinde 18 erstreckt sich von der äusseren Mündung der Öffnung 17 teilweise durch die Öffnung 17. Unterhalb des Innengewindes 18 ist die Öffnung 17 verengt, indem in diesem Abschnitt 19 deren Innendurchmesser hier dem Kerndurchmesser des Innengewindes 18 entspricht.

Im Gehäuse 10 ist der Dämpfereinsatz 20 aufgenommen. Dieser umfasst im gezeigten ersten Ausführungsbeispiel zwei Dämpferelemente 21.1, 21.2. Die Geometrie der beiden Dämpferelemente 21.1, 21.2 ist sehr ähnlich. Beide Dämpferelemente 21.1, 21.2 haben eine im Wesentlichen zylindrische äussere Form mit gleichem Umfang. Sie sind übereinander im Gehäuse 10 aufgenommen, wobei die obere Hauptfläche des oberen Dämpferelements 21.1 mit der Innenfläche des Gehäusedeckels zusammenwirkt, während die untere Hauptfläche des unteren Dämpferelements 21.2 im Einsatz die Stellfläche kontaktiert. Die untere Hauptfläche des oberen Dämpferelements 21.1 und die obere Hauptfläche des unteren Dämpferelements 21.2 kontaktieren sich grossflächig, die beiden Dämpferelemente 21.1, 21.2 sind aber ausschliesslich durch das Gehäuse 10 mechanisch miteinander verbunden.

Das obere Dämpferelement 21.1 weist entlang seiner gesamten axialen Länge dieselbe Umrissform auf, während das untere Dämpferelement 21.2 einen oberen zylindrischen Abschnitt 22 sowie einen zum oberen Abschnitt 22 koaxialen unteren zylindrischen Abschnitt 23 aufweist, dessen Durchmesser gegenüber dem oberen Abschnitt verringert ist. Beispielsweise beträgt der Durchmesser des oberen Abschnitts 22 bei einem zur Bedämpfung einer Lautsprecherbox geeigneten Dämpferelements 43 mm, und der Durchmesser des unteren Abschnitts 23 beträgt 35 mm (in der Figur 2 ist der Umfang des unteren Abschnitts 23 gestrichelt eingezeichnet). Die Höhe des oberen Abschnitts 22 beträgt 10 mm, diejenige des unteren Abschnitts 23 beträgt 3 mm. Am Übergang zwischen dem oberen Abschnitt 22 und dem unteren Abschnitt 23 ist im oberen Abschnitt 22 eine umlaufende Nut 24 ausgenommen.

Die Dämpferelemente 21.1, 21.2 sind einstückig und homogen in einem Spritzgussprozess aus einem aufgeschäumten thermoplastischen Elastomer auf Olefinbasis (TPE-O) gefertigt, beispielsweise aus dem von der Firma Exxon Mobile kommerziell erhältlichen Material Santoprene® 201-45, dem für den Aufschäumprozess 3 Gew.% eines handelsüblichen Treibmittels zugegeben wurden. Die Härte des Ausgangsmaterials beträgt in Bezug auf das obere Dämpferelement 21.1 30 Shore A, in Bezug auf das untere Dämpferelement 21.2 45 Shore A.

Mit Ausnahme der bereits beschriebenen mantelseitigen Unterschiede entspricht die Geometrie der beiden Dämpferelemente 21.1, 21.2 einander. Im Folgenden wird die Geometrie deshalb anhand des oberen Dämpferelements 21.1 beschrieben, welches ja auch im Schnitt in der Ebene A-A gemäss Figur 2 dargestellt ist. In einem oberen Bereich des Dämpferelements 21.1 ist eine Profilierung 25 ausgebildet, die eine Reihe von prismatischen, sacklochartigen Ausnehmungen 26a, 26b, 26c umfasst. Die Tiefe der Ausnehmungen 26a-c beträgt im dargestellten Ausführungsbeispiel 9 mm. Die Struktur des profilierten Bereichs und der oberen Hauptfläche des Dämpferelements 21.1 ergibt sich durch eine Anordnung von drei umlaufenden, kreisringförmigen Stegen 27a, 27b, 27c die durch radiale Stege 28a, 28b miteinander verbunden sind. Die Breiten der umlaufenden Stege 27a-c sowie der radialen Stege 28a, b sind jeweils untereinander gleich. So beträgt die Breite der umlaufenden Stege 27a-c beispielsweise 3 mm, und die Breite der radialen Stege 28a, b beträgt ebenfalls 3 mm. Die umlaufenden Stege 27a-c weisen zudem gleiche Abstände auf, so betragen die Innenradien der drei Stege 27a-c im dargestellten Ausführungsbeispiel 37 mm, 21.5 mm und 6 mm. Zwischen dem äusseren umlaufenden Steg 27a und dem inneren umlaufenden Steg 27c sind in einem Winkelabstand von jeweils 45° gleichmässig die radialen Stege 28a angeordnet. Zusätzlich verlaufen jeweils mittig zwischen diesen Stegen 28a weitere radiale Stege 28b zwischen dem äusseren umlaufenden Steg 27a und dem mittleren umlaufenden Steg 27b. Das Dämpferelement weist somit eine achtteilige Drehsymmetrie auf.

Zwischen den Stegen ergeben sich die sacklochartigen Ausnehmungen 26a-c, wobei die Ausnehmungen 26a, 26b zwischen dem äusseren Steg 27a und dem inneren Steg 27c die Form von Kreisringsegmenten haben und wobei die zentrale Ausnehmung 27c zylindrisch ist. Im Bereich der oberen Hauptfläche des Dämpferelements 21.1 haben die Ausnehmungen einen Flächenanteil von ca. 31 %. Aufgrund der Tatsache, dass sich der untere Abschnitt, welcher die Kontaktfläche mit dem unteren Dämpferelement 21.2 bildet, nicht bis zum äusseren umlaufenden Steg 27a erstreckt, findet bei der Übertragung der abzuleitenden Kräfte zwingend eine Verteilung derselben über die umlaufenden und radialen Stege statt.

Wie erwähnt, weist das untere Dämpferelement 21.2 im Wesentlichen dieselbe Geometrie der Profilierungen auf. Die Tiefe der sacklochartigen Ausnehmungen ist so gewählt, dass sich diese nicht bis in den unteren Abschnitt 23 mit reduziertem Durchmesser erstrecken. Beide Dämpferelemente 21.1, 21.2 werden so in das Gehäuse 10 eingesetzt, dass die mit den sacklochartigen Ausnehmungen versehenen Hauptflächen geräteseitig (oben) zu liegen kommen. Die geschlossene untere Hauptfläche des unteren Dämpferelements 21.2 ragt aus dem Gehäuse 10 heraus.

Die Dimensionen des hohlzylindrischen Abschnitts 11 des Gehäuses 10 sind so gewählt, dass beide Dämpferelemente 21.1, 21.2 passend aufgenommen werden können, wobei die Nase 12 des Gehäuses 10 in die Nut 24 des unteren Dämpferelements 21.2 eingreift und dieses somit formschlüssig festhält. Dies stellt sicher, dass beim Anheben des Dämpfers 1 die Dämpferelemente 21.1, 21.2 im Gehäuse 10 verbleiben. Das Einsetzen und Entfernen der Dämpferelemente 21.1, 21.2 in das bzw. aus dem Gehäuse 10 ist jedoch aufgrund seiner Elastizität ohne weiteres möglich.

Mit Hilfe des Innengewindes 18 und des verengten Abschnitts 19 einerseits sowie Schrauben bzw. Gewindebolzen oder -stangen andererseits kann das Gehäuse am Gehäuse des zu bedämpfenden Geräts, an einer Untersetzplatte oder einem Adapter zur Anpassung des Gewindes an die vom Gerät vorgegebenen Dimensionen befestigt werden.

Ein Kontakt zwischen dem Befestigungsmittel und dem Dämpfereinsatz 20 wird dabei vermieden. Gleichzeitig ermöglichen diese Mittel flexible Befestigungsmöglichkeiten an verschiedenartigen Gegenstücken.

Das Gehäuse 10 stabilisiert durch seinen Mantel die darin aufgenommenen Dämpferelemente 21.1, 21.2 in radialer Richtung. Gleichzeitig verteilt es die aufzunehmenden Kräfte gleichmässig auf die Dämpferelemente 21.1, 21.2. Zusätzlich wird durch den umlaufenden Mantel vermieden, dass die Dämpferelemente 21.1, 21.2 aufgrund des Gerätegewichts radial nach aussen gedrückt werden. Vielmehr wird in radialer Richtung eine Vorspannung in den Dämpferelementen 21.1, 21.2 aufgebaut. Diese verteilt sich aufgrund der radialen Stege 28a, b gleichmässig in den Dämpferelementen 21.1, 21.2. In vertikaler Richtung, also in Richtung der Gewichtsbelastung des zu bedämpfenden Geräts umfassen die Dämpferelemente 21.1, 21.2 durchgehende Bereiche, während in radialen Richtungen, die keine Vorspannung durch das Gerätegewicht erfahren, stets ausgenommene Bereiche vorhanden sind. Durch das Zusammenspiel des Gehäuses 10 mit den Dämpferelementen 21.1, 21.2 und durch dessen Strukturierung sind die elastischen Eigenschaften des Dämpfers 1 so eingestellt, dass sie im Betriebszustand (also bei belastetem Dämpfer 1) in axialer und in radialer Richtung ungefähr gleich sind.

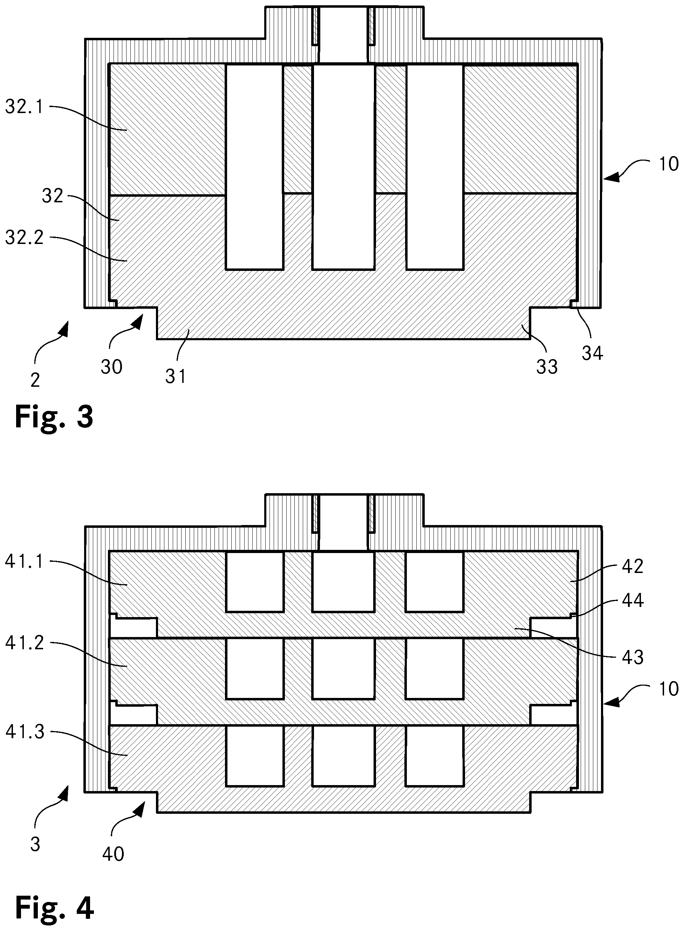

Die Figur 3 zeigt einen axialen Querschnitt durch eine zweite Ausführungsform eines erfindungsgemässen Dämpfers 2. Diese Ausführungsform weist eine Reihe von Gemeinsamkeiten mit der ersten Ausführungsform auf. Namentlich ist das Gehäuse 10 identisch ausgebildet, wird hier deshalb nicht nochmals beschrieben. Der Dämpfereinsatz 30 wird hier jedoch von einem einzelnen Dämpferelement 31 gebildet.

Das Dämpferelement 31 weist einen oberen zylindrischen Abschnitt 32 sowie einen zum oberen Abschnitt 32 koaxialen unteren zylindrischen Abschnitt 33 auf, dessen Durchmesser gegenüber dem oberen Abschnitt 32 verringert ist. Beispielsweise beträgt der Durchmesser des oberen Abschnitts 32 bei einem zur Bedämpfung einer Lautsprecherbox geeigneten Dämpferelement 43 mm, und der Durchmesser des unteren Abschnitts 33 beträgt 35 mm. Die Höhe des oberen Abschnitts 32 beträgt 23 mm, diejenige des unteren Abschnitts 23 beträgt 3 mm. Am Übergang zwischen dem oberen Abschnitt 32 und dem unteren Abschnitt 33 ist im oberen Abschnitt 32 eine umlaufende Nut 34 ausgenommen.

Der obere Abschnitt 32 weist wiederum zwei axiale Bereiche 32.1, 32.2 auf. Der obere Bereich 32.1 weist dabei eine geringere Härte auf als der untere Bereich 32.2, die Härte des oberen Bereichs 32.1 beträgt beispielsweise 30 Shore A, diejenige des unteren Bereichs 32.2 45 Shore A. Die beiden Bereiche können aus einem unterschiedlichen Material bestehen (wobei die entsprechenden Materialportionen beispielsweise miteinander verklebt oder verschweisst sind) oder dasselbe Ausgangsmaterial kann einer unterschiedlichen Nachbehandlung unterzogen worden sein.

Die Profilierung mittels sacklochartiger Ausnehmungen entspricht derjenigen gemäss der ersten Ausführungsform, wobei die Tiefe der Ausnehmungen derart gewählt ist, dass sie sich bis in den unteren axialen Bereich 32.2 erstrecken.

Die Figur 4 zeigt einen axialen Querschnitt durch eine dritte Ausführungsform eines erfindungsgemässen Dämpfers 3. Auch diese Ausführungsform weist eine Reihe von Gemeinsamkeiten mit der ersten Ausführungsform auf. Namentlich ist das Gehäuse 10 identisch ausgebildet, wird hier deshalb nicht nochmals beschrieben. Der Dämpfereinsatz 40 wird hier jedoch von drei übereinander angeordneten Dämpferelementen 41.1, 41.2, 41.3 gebildet.

Die drei Dämpferelemente 41.1...3 weisen alle dieselbe Geometrie auf. Sie weisen einen oberen zylindrischen Abschnitt 42 sowie einen zum oberen Abschnitt 42 koaxialen unteren zylindrischen Abschnitt 43 auf, dessen Durchmesser gegenüber dem oberen Abschnitt 42 verringert ist. Beispielsweise beträgt der Durchmesser des oberen Abschnitts 42 bei einem zur Bedämpfung einer Lautsprecherbox geeigneten Dämpferelement 43 mm, und der Durchmesser des unteren Abschnitts 43 beträgt 35 mm. Die Höhe des oberen Abschnitts 42 beträgt 23 mm, diejenige des unteren Abschnitts 43 beträgt 3 mm. Am Übergang zwischen dem oberen Abschnitt 42 und dem unteren Abschnitt 43 ist im oberen Abschnitt 42 eine umlaufende Nut 44 ausgenommen. Die Profilierung mittels sacklochartiger Ausnehmungen entspricht derjenigen gemäss der ersten Ausführungsform.

Im gezeigten dritten Ausführungsbeispiel sind die beiden oberen Dämpferelemente 41.1, 41.2 aus einem Material der Härte 30 Shore A gefertigt, das unterste Dämpferelement 41.3 aus einem Material der Härte 45 Shore A.

Bei den Ausführungen gemäss dem ersten oder dritten Ausführungsbeispiel lässt sich die Dämpfungscharakteristik des Dämpfers auf einfache Weise beeinflussen, indem einzelne Dämpferelemente durch solche mit einer anderen Elastizität bzw. Härte ausgetauscht werden. Stehen beispielsweise Dämpferelemente mit drei verschiedenen Härten (z. B. 30 Shore A, 45 Shore A und 55 Shore A) zur Verfügung, lassen sich bei der Variante gemäss erstem Ausführungsbeispiel drei Konfigurationen herstellen, die erfindungsgemäss funktionieren (Härte des ersten bzw. zweiten Dämpferelements: 45/30, 55/45, 55/30). Bei der Variante gemäss drittem Ausführungsbeispiel ist die Zahl der möglichen erfindungsgemässen Konfigurationen noch weit grösser (55/30/30, 55/45/45, 55/30/45, 55/45/30, 55/55/30, 55/55/45, 45/30/30, 45/45/30, 45/55/30, 45/55/45, 30/45/30, 30/55/30, 30/55/45). Bei der Wahl der Dämpferelemente spielen nicht nur die absoluten Werte der Härte eine Rolle, sondern auch das Verhältnis der Härten der unterschiedlichen Dämpferelemente.

Die Erfindung ist nicht auf die dargestellten Ausführungsbeispiele beschränkt. Insbesondere Details der Geometrie von Gehäuse und Dämpferelementen können anders ausgebildet sein. Die Profilierungen der Dämpferelemente sind nicht zwingend, diese können auch fehlen. Die konkreten Werte für die Härte der Dämpferelemente (bzw. für die sich daraus ergebende Elastizität) können ebenfalls variiert werden, insbesondere in Funktion der geometrischen Struktur der jeweiligen Dämpferelemente. In Abhängigkeit der zu bedämpfenden Geräte können die Dämpfer grösser oder kleiner dimensioniert werden.

Die Gehäuse und Dämpferelemente müssen zudem nicht kreiszylindrisch ausgebildet sein, andere Umrissformen sind möglich.

Zusammenfassend ist festzustellen, dass die Erfindung einen Dämpfer zum Anbringen zwischen einem Gerät der Beschallungstechnik oder Unterhaltungselektronik oder einem Musikinstrument und einer Stellfläche schafft, welcher eine klanglich vorteilhafte Bedämpfung unterschiedlicher Geräte bzw. Musikinstrumente ermöglicht.

## Patentansprüche

1. Dämpfer (1) zum Anbringen zwischen einem Gerät der Beschallungstechnik oder Unterhaltungselektronik, insbesondere einem Audio-Wiedergabegerät, oder einem Musikinstrument und einer Stellfläche, umfassend einen Dämpfereinsatz (20) aus einem elastischen Material, wobei der Dämpfereinsatz (20) einen vorderen Bereich (21.2) und einen hinteren Bereich (21.1) aufweist, wobei eine erste Elastizität des vorderen Bereichs (21.2) des Dämpfereinsatzes (20) geringer ist als eine zweite Elastizität des hinteren Bereichs (21.1) des Dämpfereinsatzes (20), **dadurch gekennzeichnet, dass** der Dämpfer ein Gehäuse (10) zur Anbringung am Gerät oder am Musikinstrument umfasst, wobei der Dämpfereinsatz (20) derart mantelseitig passend in das Gehäuse (10) einsetzbar ist, dass er mantelseitig das Gehäuse (10) kontaktiert, ein vorderer Bereich (21.2) des Dämpfereinsatzes (20) bei angebrachtem Gehäuse (10) in eine Richtung, die dem Gerät oder Musikinstrument abgewandt ist, teilweise aus dem Gehäuse (10) hervor ragt und der Bereich (21.1) höherer Elastizität vollständig vom Gehäuse (10) umschlossen wird.

2. Dämpfer nach Anspruch 1, **dadurch gekennzeichnet, dass** der Dämpfereinsatz (20) zwei Dämpferelemente (21.1, 21.2) umfasst, wobei ein erstes der Dämpferelemente (21.2) die erste Elastizität aufweist und ein zweites der Dämpferelemente (21.1) die zweite Elastizität aufweist.

3. Dämpfer nach Anspruch 2, **dadurch gekennzeichnet, dass** die zwei Dämpferelemente (21.1, 21.2) je einstückig aus einem elastischen Kunststoffmaterial ausgebildet sind.

4. Dämpfer nach einem der Ansprüche 1 bis 4, **dadurch gekennzeichnet, dass** der Dämpfereinsatz (20) aus einem thermoplastischen Elastomer (TPE) gefertigt ist, insbesondere aus einem thermoplastischen Elastomer auf Olefinbasis (TPE-O).

5. Dämpfer nach Anspruch 4, **dadurch gekennzeichnet, dass** der vordere Bereich (21.2) durch ein Material mit einer ersten Härte im Bereich 35 - 55 Shore A gebildet wird und dass der hintere Bereich (21.1) durch ein Material mit einer zweiten Härte im Bereich 15 - 40 Shore A gebildet wird, wobei eine Differenz der Härten mindestens 8 Shore A beträgt.

6. Dämpfer nach einem der Ansprüche 1 bis 5, **dadurch gekennzeichnet, dass** der Dämpfereinsatz (20) aus einem aufgeschäumten Kunststoffmaterial gefertigt ist.

7. Dämpfer nach einem der Ansprüche 1 bis 6, **dadurch gekennzeichnet, dass** sich der vordere Bereich (21.2) bei eingesetztem Dämpfereinsatz (20) axial mindestens bis zu einer Tiefe d in das Gehäuse erstreckt, wobei die Tiefe d mindestens 1 %, insbesondere mindestens 2 %, einer maximalen radialen Ausdehnung des Dämpfereinsatzes (20) beträgt.

8. Dämpfer nach einem der Ansprüche 1 bis 7, **dadurch gekennzeichnet, dass** der Dämpfereinsatz (20) eine Struktur mit mehreren beabstandeten Bereichen verringerten Querschnitts aufweist.

9. Dämpfer nach einem der Ansprüche 1 bis 8, **dadurch gekennzeichnet, dass** ein Verhältnis einer maximalen radialen Ausdehnung des Dämpfereinsatzes (20) zu einer Höhe des Dämpfereinsatzes (20) im Bereich 2.25 - 5.5, bevorzugt im Bereich 2.75 - 4.0, liegt.

10. Dämpfer nach einem der Ansprüche 1 bis 9, **dadurch gekennzeichnet, dass** das Gehäuse (10) eine Gewindeöffnung (17) zur Aufnahme einer Befestigungsschraube oder eines Befestigungsadapters umfasst.

## Claims

1. Damper (1) to be fitted between a sound reproduction device or consumer electronics, in particular an audio play-back device, or a musical instrument and a floor space, comprising a damper insert (20) made of an elastic material, the damper insert (20) having a front region (21.2) and a rear region (21.1), a first elasticity of the front region (21.2) of the damper insert (20) being lower than a second elasticity of the rear region (21.1) of the damping insert (20), **characterized in that** the damper comprises a housing (10) to be fitted to the device or to the musical instrument, wherein the damper insert (20) can be inserted suitably into the housing (10) on the shell side in such a way that it makes contact with the housing (10) on the shell side, when the housing (10) is fitted, a front region (21.2) of the damping insert (20) projects partly out of the housing (10) in a direction which faces away from the device or musical instrument, and the region (21.1) of higher elasticity is enclosed completely by the housing (10).

2. Damper according to Claim 1, **characterized in that** the damper insert (20) comprises two damper elements (21.1, 21.2), wherein a first of the damper elements (21.2) has the first elasticity and a second of the damper elements (21.1) has the second elasticity.

3. Damper according to Claim 2, **characterized in that** the two damper elements (21.1, 21.2) are each formed in one piece from an elastic plastic material.

4. Damper according to one of Claims 1 to 4, **characterized in that** the damper insert (20) is made of a thermoplastic elastomer (TPE), in particular from an olefin-based thermoplastic elastomer (TPE-O).

5. Damper according to Claim 4, **characterized in that** the front region (21.2) is formed by a material having a first hardness in the range 35 - 55 Shore A, and **in that** the rear region (21.1) is formed by a material having a second hardness in the range 15 - 40 Shore A, a difference in the hardnesses being at least 8 Shore A.

6. Damper according to one of Claims 1 to 5, **characterized in that** the damper insert (20) is made of a foamed plastic material.

7. Damper according to one of Claims 1 to 6, **characterized in that**, when the damper insert (20) is inserted, the front region (21.2) extends axially into the housing at least as far as a depth d, wherein the depth d is at least 1%, in particular at least 2%, of a maximum radial extent of the damping insert (20).

8. Damper according to one of Claims 1 to 7, **characterized in that** the damper insert (20) has a structure with a plurality of spaced-apart regions of reduced cross section.

9. Damper according to one of Claims 1 to 8, **characterized in that** a ratio of a maximum radial extent of the damper insert (20) to a height of the damping insert (20) lies in the range 2.25 - 5.5, preferably in the range 2.75 - 4.0.

10. Damper according to one of Claims 1 to 9, **characterized in that** the housing (10) comprises a threaded opening (17) to receive a fixing screw or a fixing adapter.

## Revendications

1. Amortisseur (1) à placer entre un appareil de la technologie de la sonorisation ou de l'électronique de divertissement, en particulier un appareil de reproduction audio, ou un instrument de musique et une face de pose, comprenant un insert d'amortisseur (20) en un matériau élastique, dans lequel l'insert d'amortisseur (20) présente une région avant (21.2) et une région arrière (21.1), dans lequel une première élasticité de la région avant (21.2) de l'insert d'amortisseur (20) est inférieure à une deuxième élasticité de la région arrière (21.1) de l'insert d'amortisseur (20), **caractérisé en ce que** l'amortisseur comprend un boîtier (10) à placer sur l'appareil ou sur l'instrument de musique, dans lequel l'insert d'amortisseur (20) peut être inséré dans le boîtier (10) de façon ajustée en périphérie, de telle manière qu'il touche le boîtier (10) en périphérie, une région avant (21.2) de l'insert d'amortisseur (20) sort partiellement hors du boîtier (10), lorsque le boîtier (10) est mis en place, dans une direction qui est à l'opposé de l'appareil ou de l'instrument de musique, et la région (21.1) de plus haute élasticité est entièrement entourée par le boîtier (10).

2. Amortisseur selon la revendication 1, **caractérisé en ce que** l'insert d'amortisseur (20) comprend deux éléments d'amortisseur (21.1, 21.2), dans lequel un premier des éléments d'amortisseur (21.2) présente la première élasticité et un deuxième des éléments d'amortisseur (21.1) présente la deuxième élasticité.

3. Amortisseur selon la revendication 2, **caractérisé en ce que** les deux éléments d'amortisseur (21.1, 21.2) sont chacun formés d'une seule pièce en un matériau de matière plastique élastique.

4. Amortisseur selon l'une quelconque des revendications 1 à 4, **caractérisé en ce que** l'insert d'amortisseur (20) est fabriqué en un élastomère thermoplastique (TPE), en particulier en un élastomère thermoplastique à base d'oléfine (TPE-O).

5. Amortisseur selon la revendication 4, **caractérisé en ce que** la région avant (21.2) est formée par un matériau ayant une première dureté dans la plage de 35 à 55 Shore A et **en ce que** la région arrière (21.1) est formée par un matériau ayant une deuxième dureté dans la plage de 15 à 40 Shore A, dans lequel une différence des duretés vaut au moins 8 Shore A.

6. Amortisseur selon l'une quelconque des revendications 1 à 5, **caractérisé en ce que** l'insert d'amortisseur (20) est fabriqué en un matériau de matière plastique expansé.

7. Amortisseur selon l'une quelconque des revendications 1 à 6, **caractérisé en ce que** la région avant (21.2) s'étend axialement, lorsque l'insert d'amortisseur (20) est inséré, au moins jusqu'à une profondeur d dans le boîtier, dans lequel la profondeur d vaut au moins 1 %, en particulier au moins 2 %, d'une extension radiale maximale de l'insert d'amortisseur (20) .

8. Amortisseur selon l'une quelconque des revendications 1 à 7, **caractérisé en ce que** l'insert d'amortisseur (20) présente une structure comportant plusieurs régions espacées de section transversale réduite.

9. Amortisseur selon l'une quelconque des revendications 1 à 8, **caractérisé en ce qu'**un rapport d'une extension radiale maximale de l'insert d'amortisseur (20) à une hauteur de l'insert d'amortisseur (20) se situe dans la plage de 2,25 à 5,5, de préférence dans la plage de 2,75 à 4,0.

10. Amortisseur selon l'une quelconque des revendications 1 à 9, **caractérisé en ce que** le boîtier (10) comprend une ouverture filetée (17) destinée à recevoir une vis de fixation ou un adaptateur de fixation.
